Europäisches Patentamt

European Patent Office

Office européen des brevets

(19)

(11) Veröffentlichungsnummer: **0 139 147**
**B1**

(12) EUROPÄISCHE PATENTSCHRIFT

(45) Veröffentlichungstag der Patentschrift: **11.04.90**

(51) Int. Cl.⁵: **E 04 F 15/024,** F 24 D 3/00

(21) Anmeldenummer: **84109825.4**

(22) Anmeldetag: **17.08.84**

(54) Beheiz- oder kühlbarer Doppelboden.

(30) Priorität: **24.08.83 DE 3330468**

(43) Veröffentlichungstag der Anmeldung:
**02.05.85 Patentblatt 85/18**

(45) Bekanntmachung des Hinweises auf die
Patenterteilung:
**11.04.90 Patentblatt 90/15**

(84) Benannte Vertragsstaaten:
**AT BE LU NL**

(56) Entgegenhaltungen:
**DE-C-3 137 410**
**FR-A-1 306 680**

(73) Patentinhaber: **MAHLE GMBH**
**Pragstrasse 26-46 Postfach 50 07 69**
**D-7000 Stuttgart 50 (DE)**

(72) Erfinder: **Förster, Werner**
**Hauptstrasse 50A**
**D-3000 Hannover 91 (DE)**

(74) Vertreter: **Pfusch, Volker, Dipl.-Ing.**
**MAHLE GMBH Patentabteilung Pragstrasse 26-**
**46 Postfach 50 07 69**
**D-7000 Stuttgart 50 (DE)**

**Beschreibung**

Die Erfindung betrifft einen beheiz- oder kühlbaren Doppelboden nach dem Oberbegriff des Patentanspruchs 1.

Derartig beheizbare Doppelböden sind z. B. aus der FR—PS 1.306.680 bekannt. Bei der bekannten Ausführung erfolgt die Wärmeübertragung von den wärmeführenden Rohrleitungen zu den Bodenplatten über Strahlung und Konvektion. Eine direkte Wärmeleitung zwischen Rohrleitung und Bodenplatten erfolgt nicht. Die schirmartigen unterhalb den Rohrleitungen angebrachten Isolierelemente stellen eine relativ unzureichende Isolierung gegenüber zum Unterboden abfließender Wärme dar, da sie keine vollständige Trennung des Raumes zwischen Bodenplatten und Isolierelementen einerseits und dem Raum zwischen Isolierelement und Unterboden andererseits bewirken.

Durch zwischen Bodenplatten und Unterboden angeordnete Rohrleitungen beheizbare Doppelböden sind darüberhinaus auch aus der DE—PS 31 37 410 bekannt. Bei jener Ausführung liegen die Rohrleitungen allerdings direkt an den Bodenplatten an und die Wärmeübertragung soll dort praktisch ausschließlich durch direkte Wärmeleitung in die Bodenplatten hinein erfolgen. Diese Ausbildungsart befriedigt insbesondere in solchen Fällen nicht, in denen die Unterseite der Bodenplatten relativ uneben ist und damit nur punktförmige Kontaktflächen zur Verfügung stehen oder wenn das Material der Bodenplatten, mit dem die Rohrleitungen in Kontakt stehen, ein schlechter Wärmeleiter ist. In solchen Fällen ist es für eine wirkungsvolle Wärmeübertragung erforderlich, für den Wärmeübergang alle Wärmeübertragungsmechanismen, nämlich Wärmeübertragung durch Leitung, Konvektion und Strahlung, gemeinsam und optimal aufeinander abgestimmt zur Anwendung zu bringen. Dies ist die Aufgabe der vorliegenden Erfindung, die dabei in erster Linie von dem Gegenstand der FR—PS 1.306680 als dem angestrebten Lösungsprinzip nächstkommender bekannter Ausführung ausgeht.

Die erfindungsgemäße Verbesserung dieser bekannten Ausführungsform enthalten die Merkmale des kennzeichnenden Teils des Patentanspruchs 1.

Zweckmäßige Ausgestaltungen des erfindungsgemäßen Lösungsprinzips enthalten die Unteransprüche.

Ein ganz wesentlicher Vorteil der erfindungsgemäßen Einrichtung besteht darin, daß unterhalb der Bodenplatten eine Vielzahl getrennter in sich abgeschlossener Kammern zwischen wärmeübertragender Rohrleitung und Bodenplatten vorhanden sind, wobei die Wärmeübertragung in diesen Kammern sowohl durch Leitung als auch durch Konvektion und Strahlung erfolgen kann. Ein weiterer Vorteil ist darin zu sehen, daß die Kammern so angeordnet werden können, daß unterhalb des Doppelbodens durchgehende parallel zu den Rohrleitungen verlaufende Streifen bzw. Bahnen von den Kammern unbedeckt bleiben können, um dort ohne Beeinträchtigungen oder jeweilige Demontage des Beheizungssystems von oben nach Abheben der Bodenplatten frei zugängliche Installationsräume, die ja den besonderen Vorteil von Doppelböden darstellen, zur Verfügung zu haben.

Diese und weitere Vorteile der Erfindung lassen sich recht deutlich dem nachfolgend beschriebenen und in der Zeichnung dargestellten Ausführungsbeispiel entnehmen. In der Zeichnung zeigen

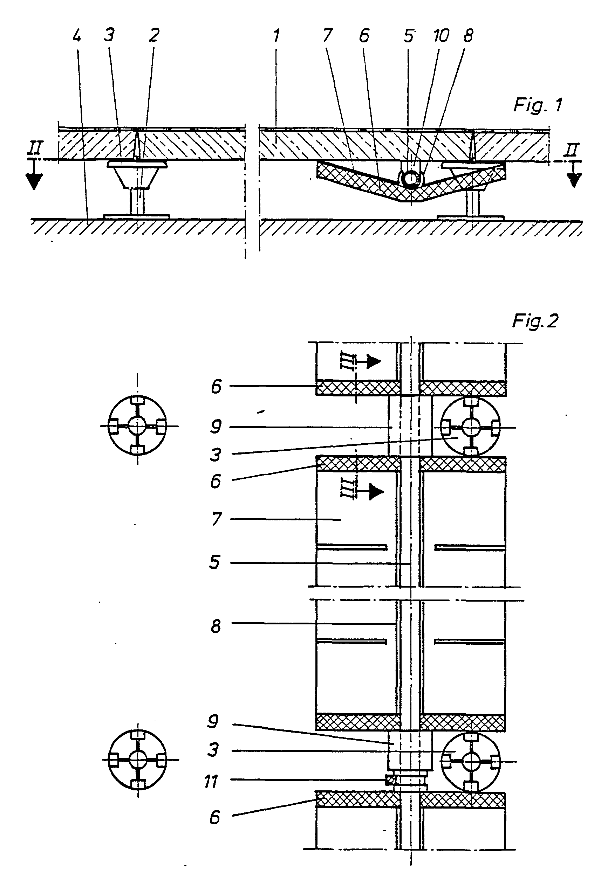

Fig. 1 einen ausschnittsweisen Querschnitt durch einen aufgeständerten Doppelboden,

Fig. 2 einen Schnitt nach Linie II—II in Fig. 1,

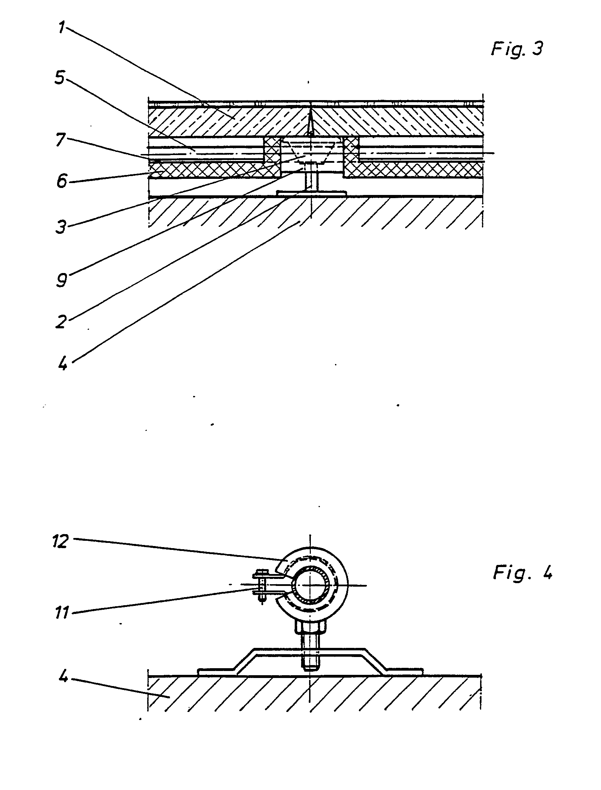

Fig. 3 einen Schnitt nach Linie III—III in Fig. 2 und Fig. 4 einen Schnitt durch ein Rohrleitungs-Befestigungselement.

Die einzelnen Bodenplatten 1 des Doppelbodens sind über Stützen 2 mit Auflagerscheiben 3 auf dem Unterboden 4 gelagert. Rohrleitungen 5 transportieren das Wärmeträgerfluid, mit dem der Doppelboden erwärmt werden soll. An die Rohrleitungen 5 sind angeformt einzelne Kästen 6 aus Isoliermaterial. Im Inneren sind die Kästen 6 mit einem Blech 7 aus gut wärmeleitfähigem Material ausgekleidet. Dabei ist es zweckmäßig, die Auskleidung ausschließlich in Richtung senkrecht zu der Rohrleitung 5 vorzusehen. Auf diese Weise liegt der Kasten 6 in Richtung senkrecht zur Rohrleitung 5 jeweils mit dem zur inneren Auskleidung aufgebrachten Blech 7 an den Bodenplatten an, während er an seinen von der Rohrleitung 5 durchstoßenen Seiten unausgekleidet direkt an die Bodenplatten 1 angrenzt. Die Bleche 7 lassen sich so formen, daß sie ein Klemmverschlußmittel 8 zur einfachen Montage auf die Rohrleitungen 5 aufweisen. Zur Wärmeisolierung der zwischen den einzelnen Kästen unabgedeckt verbleibenden Abschnitte der Rohrleitungen 5 werden diese mit Isolierschalen 9 abgedeckt. Diese grenzen direkt an die Kästen 6 an und decken damit auch die zur Aufnahme der Rohrleitungen erforderlichen Schlitze 10 in den Kästen isolierend ab.

Auf dem Unterboden werden die Rohrleitungen 5 über Rohrschellen 11 gelagert. Auf ihrem das Rohr umschließenden Umfang ist die Rohrschelle 11 mit elastischem Material 12 versehen, das eine federnde Auflagerung des Rohres ermöglicht. Eine federnde Lagerung der Rohrleitungen 5 kann auch durch Einsatz anderer an sich bekannter Federelemente in die Verbindung zwischen Rohrschelle 11 und Unterboden 4 erreicht werden.

Um eine möglichst gute Kontaktanlage des Bleches 7 an die Unterseite der Bodenplatten 1 zu erreichen, werden die Bleche 7 bei Auflage der Bodenplatten leicht elastisch verformt.

Die Größe der Isolier-Kästen 6 ist so ausgelegt, daß sie ohne weiteres zwischen den Stützen 2 mit Auflagerscheiben 3 untergebracht werden können. In Richtung quer zu den Rohrleitungen 5 sind die Kästen 6 jeweils so angeordnet, daß sie einerseits Bereiche zweier angrenzender Bodenplatten abdecken, wobei sie andererseits in bezug auf die einzelnen Platten derart unsymmetrisch unter diesen angeordnet sind, daß unter jeder Platte ein über die Länge der Rohrleitungen 5 von den Kästen 6 unabgedeckter Streifen verbleibt. Diese Streifen sind jeweils durch Abdecken der Bodenplatten ohne Demontage irgend welcher für die Beheizung erforderlicher Teile frei zugänglich. Dies ist ein ganz wesentliches Merkmal des nach der Erfindung ausgestalteten beheizbaren Doppelbodens.

Die Auskleidung der Kästen 6 kann anstelle durch die Bleche 7 oder zusätzlich zu solchen Blechen 7 mit einem den Raum zwischen dem Kasten und den Bodenplatten ausfüllenden Drahtgestrick erfolgen. Dadurch läßt sich eine gute Wärmeleitung zwischen Rohrleitung und Bodenplatten erreichen. Um eine gute Kontaktanlage der Kästen 6 an den Bodenplatten 1 zu erhalten, können auch die Kästen 6 selbst aus einem elastischen Material sein, das eine federnde Anlage der Kästen an den Bodenplatten sicherstellt.

**Patentanspruch**

1. Beheiz- oder kühlbarer Doppelboden mit über einzelne Stützen (2) in den Eckpunkten aufgeständerten Bodenplatten (1), bei dem unter den aufgeständerten Bodenplatten (1) von einem Wärmeträgerfluid durchströmte Rohrleitungen (5) im Abstand sowohl zu den Bodenplatten (1) als auch zu dem Unterboden (4) angeordnet und zum Unterboden (4) hin mit Isolierelementen versehen sind, die aus einem den Bodenplatten (1) zugewandten mit den Rohrleitungen (5) in direktem Kontakt stehenden gut wärmeleitenden Material, z. B. Blech (7), und einer zum Unterboden (4) gerichteten Isolierschicht bestehen, gekennzeichnet durch die Merkmale
a) die Isolierelemente sind als nach oben offene an den Rohrleitungen (5) fixierte Kasten (6) ausgebildet,
b) die Rohrleitung (5) ist auf dem Unterboden (4) unabhängig von den Stützen (2) für sich gelagert,
c) die Kästen (6) liegen mit ihren obersten Rändern allseitig an den Bodenplatten (1) von unten an.
2. Beheiz- oder kühlbarer Doppelboden nach Anspruch 1, dadurch gekennzeichnet, daß die Kästen (6) an gegenüberliegenden Seitenwänden von der offenen Seite ausgehend Schlitze (10) zur Aufnahme der Rohrleitung (5) aufweisen.
3. Beheiz- oder kühlbarer Doppelboden nach Anspruch 1 oder 2, dadurch gekennzeichnet, daß zwischen den Kästen (6) in Richtung der Rohrleitungen (5) Abstände vorgesehen sind für die Stützen (2) und für die Lager der Rohrleitungen (5).
4. Beheiz- oder kühlbarer Doppelboden nach einem der vorhergehenden Ansprüche, dadurch gekennzeichnet, daß die zwischen den Kästen (6) verbleibenden Rohrleitungsabschnitte mit Isolierschalen (9) ummantelt sind, die gleichzeitig etwa vorhandene Schlitze (10) der Kästen (6) zur Aufnahme der Rohrleitungen (5) abdecken.

5. Beheiz- oder kühlbarer Doppelboden nach einem der vorhergehenden Ansprüche, dadurch gekennzeichnet, daß die Kästen (6) zumindest teilweise aus elastischem Material bestehen.
6. Beheiz- oder kühlbarer Doppelboden nach einem der vorhergehenden Ansprüche, dadurch gekennzeichnet, daß das gut wärmeleitfähige Material (7) der Kästen (6) elastisch nachgiebig ist.
7. Beheiz- oder kühlbarer Doppelboden nach einem der vorhergehenden Ansprüche, dadurch gekennzeichnet, daß die Lager (Rohrschellen 11) der Rohrleitungen (5) zumindest in Richtung senkrecht zu den Bodenplatten (1) elastisch nachgiebig sind.
8. Beheiz- oder kühlbarer Doppelboden nach einem der vorhergehenden Ansprüche, dadurch gekennzeichnet, daß in Richtung quer zu den Rohrleitungen (5) die Kästen (6) jeweils Teilbereiche zweier benachbarter Bodenplatten (1) abdecken und daß das Außenmaß der Kästen (6) in dieser Richtung jeweils kleiner als das halbe Außenmaß der zwei betreffenden benachbarten Bodenplatten (1) ist, wobei der sich dadurch ergebende unabgedeckte Bodenplattenbereich jeweils in einem nicht von den Stützen (2) des Doppelbodens erfaßten Querbereich zu den Rohrleitungen (5) angeordnet ist.
9. Beheiz- oder kühlbarer Doppelboden nach einem der vorhergehenden Ansprüche, dadurch gekennzeichnet, daß die Kästen (6) mit an dem gut wärmeleitenden Material (7) vorgesehenen Klemmverschlußmitteln (8) an den Rohrleitungen (5) fixierbar sind.

**Revendications**

1. Plancher double pouvant être chauffé ou refroidi, avec des plaques de plancher (1) surélevées sur des supports individuels (2) dans les coins, dans lequel il est prévu en-dessous des plaques de plancher (1) surélevées des tubulures (5) parcourues par un fluide caloporteur et distantes tant des plaques de plancher (1) que de l'assise ou plancher sous-jacent (4) et pourvues jusqu'à l'assise (4) d'éléments d'isolation consistant en un matériau bon conducteur de chaleur se trouvant en regard des plaques de plancher (1) et en contact direct avec les tubulures (5), par exemple une tôle (7), et d'une couche isolante dirigée vers l'assise (4), caractérisé en ce que
a) les éléments d'isolation sont prévus en forme de caissons (6) ouverts vers le haut fixés aux tubulures (5),
b) la tubulure (5) est prévue sur l'assise (4) indépendamment en soi des supports (2),
c) les caissons (6) prennent appui avec leurs bords supérieurs de tous côtés contre le dessous des plaques de plancher (1).
2. Plancher double pouvant être chauffé ou refroidi, selon la revendication 1, caractérisé en ce que les caissons (6) présentent en leurs parois latérales opposées des fentes (10) partant des côtés ouverts pour le logement des tubulures (5).
3. Plancher double pouvant être chauffé ou refroidi, selon la revendication 1 ou 2, caractérisé en ce qu'il est prévu entre les caissons (6), en direction des tubulures (5), des espacements pour les supports (2) et pour l'appui des tubulures (5).

4. Plancher double pouvant être chauffé ou refroidi, selon l'une des revendications précédentes, caractérisé en ce que les sections de tubulures restant entre les caissons (6) sont entourées de coquilles d'isolation (9) qui recouvrent en même temps les fentes (10) des caissons (6) éventuellement prévues pour les tubulures (5).

5. Plancher double pouvant être chauffé ou refroidi, selon l'une des revendications précédentes, caractérisé en ce que les caissons (6) se composent au moins partiellement de matériau élastique.

6. Plancher double pouvant être chauffé ou refroidi, selon l'une des revendications précédentes, caractérisé en ce que le matériau bon conducteur de chaleur (7) des caissons (6) peut se déformer élastiquement.

7. Plancher double pouvant être chauffé ou refroidi, selon l'une des revendications précédentes, caractérisé en ce que les supports (agrafes 11) des tubulures (5) sont élastiquement déformables au moins dans la direction perpendiculaire aux plaques de plancher (1).

8. Plancher double pouvant être chauffé ou refroidi, selon l'une des revendications précédentes, caractérisé en ce que, dans le sens transversal aux tubulures (5), les caissons (6) recouvrent chaque fois des zones partielles de deux plaques de plancher (1) voisines et que la dimension extérieure des caissons (6) dans cette direction est chaque fois inférieure à la moitié de la dimension extérieure de ces deux plaques de plancher (1) voisines, la zone de plaque de plancher non couverte qui en résulte se trouvant chaque fois dans une zone hors de portée des supports (2) et transversale par rapport aux tubulures (5).

9. Plancher double pouvant être chauffé ou refroidi, selon l'une des revendications précédentes, caractérisé en ce que les caissons (6) peuvent être fixés aux tubulures (5) avec des moyens de serrage (8) prévus au matériau bon conducteur de chaleur (7).

**Claims**

1. Heatable or coolable double floor, comprising floor plates (1) supported at their corner points by individual columns (2), wherein pipes (5), through which a heat carrier fluid flows, are disposed beneath the supported floor plates (1) at a distance both from the floor plates (1) and from the underfloor (4) and are provided with insulating elements towards the underfloor (4), which insulating elements consist of a material having good thermal conductivity, e.g. metal sheet (7), facing towards the floor plates (1) and in direct contact with the pipes (5), and of a insulating layer facing towards the underfloor (4), characterized by the features

a) the insulating elements are constructed as open-topped boxes (6), fixed to the pipes (5),

b) the pipe (5) is supported itself from the underfloor (4), independently of the columns (2),

c) the boxes (6) bear with their top edges all around against the floor plates (1) from below.

2. Heatable or coolable double floor according to Claim 1, characterized in that the boxes (6) possess, at mutually opposite side walls, slits (10) leading from the open side for receiving the pipe (5).

3. Heatable or coolable double floor according to Claim 1 or 2, characterized in that gaps are provided between the boxes (6) in the direction cf the pipes (5), for the columns (2) and for the bearings of the pipes (5).

4. Heatable or coolable double floor according to one of the preceding Claims, characterized in that the lengths of pipe remaining between the boxes (6) are clad with insulating shells (9), which at the same time cover any slits (10) in the boxes (6) for receiving the pipes (5).

5. Heatable or coolable double floor according to one of the preceding Claims, characterized in that the boxes (6) are at least partly of elastic material.

6. Heatable or coolable double floor according to one of the preceding Claims, characterized in that the material (7) of the boxes (6) which has good thermal conductivity is elastically resilient.

7. Heatable or coolable double floor according to one of the preceding Claims, characterized in that the bearings (pipe clips 11) for the pipes (5) are elastically resilient at least in a direction perpendicular to the floor plates (1).

8. Heatable or coolable double floor according to one of the preceding Claims, characterized in that in the directicn transversely to the pipes (5), the boxes (6) each cover partial regions of two adjacent floor plates (1) and that the external dimensicn of the boxes (6) in this direction is in each case smaller than one-half the external dimension of the two relevant adjacent floor plates (1), the resultant exposed floor plate region being in each case disposed in a transverse region to the pipes (5) not occupied by the columns (2) cf the double floor.

9. Heatable or coolable double floor according to one of the preceding Claims, characterized in that the boxes (6) can be fixed to the pipes (5) by clamp closure means (8) provided on the material (7) having good thermal conductivity.

Fig. 1

Fig. 2

*Fig. 3*

*Fig. 4*